# EUROPEAN PATENT APPLICATION

(11) **EP 4 560 871 A1**
(43) Date of publication of application: **28.05.2025**
(21) Application number: 23211238.3
(22) Date of filing: 21.11.2023
(51) Int. Cl.: H02J 4/00, H02H 3/02, H02H 3/087, H02H 7/26

(54) **AIRCRAFT ELECTRIC POWER SUPPLY SYSTEM, AIRCRAFT COMPRISING AN ELECTRIC POWER SUPPLY SYSTEM, AND METHOD OF SWITCHING OFF THE SUPPLY OF ELECTRIC POWER IN AN AIRCRAFT ELECTRIC POWER SUPPLY SYSTEM**

(71) Applicant: HS Elektronik Systeme GmbH, 86720 Noerdlingen (DE)
(72) Inventor: Schreitmüller, Stefan, 86736 Auhausen (DE); Greither, Markus, 86154 Augsburg (DE); Gietzold, Thomas, 73485 Unterwilflingen (DE); Queck, Cornelius, 89343 Jettingen-Scheppach (DE)
(74) Representative: Schmitt-Nilson Schraud Waibel Wohlfrom Patentanwälte Partnerschaft mbB

(57) **Abstract**

Aircraft electric power supply system (2) comprises: an electric power source (4) with at least one electric power supply terminal (4a) for providing electric power; an electric power supply line (8) for electrically coupling the at least one electric power supply terminal (4a) to a line terminal (12a) of an electric load (12); an electric power controller (14), which is arranged in the electric power supply line (8) for selectively controlling the supply of electric power from the electric power source (4) via the electric power supply line (8) to the electric load (12); and an electric circuit breaker (16), which is arranged in the electric power supply line (8) in serial configuration with the electric power controller (14), allowing the electric circuit breaker (16) to interrupt the supply of electric power from the electric power source (4) via the electric power supply line (8) to the electric load (12) independently of the electric power controller (14). The electric circuit breaker (16) has a different configuration than the electric power controller (14).

## Description

The present invention is related to an aircraft electric power supply system. The present invention is further related to an aircraft comprising an aircraft electric power supply system, and to a method of switching off the supply of electric power in an aircraft electric power supply system.

Modern aircraft usually comprise an electric system including at least one aircraft electric power supply system for supplying electric power from at least one electric power source to at least one electric load.

In case of a malfunction of a component of the electric system, an excessively large electric current ("overcurrent") may flow through the electric system. Further, due to a malfunction, the electric power supply system may provide an electric voltage, which is higher than intended ("overvoltage"). Such overcurrents and overvoltages may cause overheating and damaging of components, including electric wires, of the electric system.

Aircraft electric power supply systems are therefore equipped with electric safety devices for interrupting the supply of electric power in case of a malfunction, in particular in case of a malfunction causing an overcurrent or an overvoltage, in order to prevent further damage of the components of the electric system.

Such electric safety devices include electric fuses, in particular fuses comprising a component that melts in case of an overcurrent ("melting fuses" or fuselinks), in order to securely and reliably interrupt the supply of electric power in case of a malfunction.

These fuses have a large size, and their installation and replacement, which is necessary after they have been triggered, is laborious and expensive.

It would therefore be beneficial to provide an enhanced aircraft electric power supply system, which is able to provide the desired operational safety, even in case of electric malfunctions including overcurrents and/or overvoltages, without employing fuses, such as melting fuses or fuselinks.

According to an exemplary embodiment of the invention, an aircraft electric power supply system comprises an electric power source comprising an electric power supply terminal for providing electric power; an electric power supply line for electrically coupling the electric power supply terminal to a line terminal of an electric load; an electric power controller, which is arranged in the electric power supply line for selectively controlling the supply of electric power from the electric power source via the electric power supply line to the electric load; and an electric circuit breaker, which is arranged in the electric power supply line in serial configuration with the electric power controller, allowing the electric circuit breaker to interrupt the supply of electric power from the electric power source via the electric power supply line to the electric load independently of the electric power controller. In an aircraft electric power supply system according to an exemplary embodiment of the invention, the electric circuit breaker has a configuration that differs from the configuration of the electric power controller.

Exemplary embodiments of the invention also include a method of interrupting the supply of electric power to an electric load in an aircraft electric power supply system according to an exemplary embodiment of the invention; wherein the method includes causing at least one of the electric power controller and the electric circuit breaker to interrupt the supply of electric power from the electric power source via the electric power supply line to the electric load independently of each other.

By employing an electric power controller and an electric circuit breaker, which are arranged in a serial configuration, with the electric circuit breaker having a different configuration than the electric power controller, an aircraft electric power supply system according to an exemplary embodiment of the invention has redundancy ensuring operational safety of the aircraft electric power supply system, even in case of a malfunction within the aircraft electric power supply system, without employing a fuse, such as a melting fuse or a fuselink.

More particularly, in an aircraft electric power supply system according to an exemplary embodiment of the invention, the electric circuit breaker acts as an additional safety device providing redundancy and additional safety. The electric power controller might be prevented from interrupting the supply of electric power within the aircraft electric power supply system in case of a malfunction. The aircraft electric power supply system according to an exemplary embodiment of the invention allows for a secure operation of the aircraft electric power supply system even in case of a malfunction of the electric power controller.

According to exemplary embodiments of the invention, the electric circuit breaker and the electric power controller have different electric configurations. This may include that different electric components are employed within the electric circuit breaker and the electric power controller, respectively. As a result, the risk is considerably reduced that an interruption of the supply of electric power from the electric power source to the electric load via the electric power supply line, which may be necessary due to a malfunction of the aircraft electric power supply system, is prevented by a simultaneous failure of the electric circuit breaker and the electric power controller.

In consequence, exemplary embodiments of the invention provide an aircraft electric power supply system, which may be operated safely without employing conventional fuses, such as melting fuses or fuselinks.

Particular embodiments may further include any of the following optional features, alone or in combination, unless explicitly specified as alternative features.

In an aircraft electric power supply system according to an exemplary embodiment of the invention, the electric power supply line does not include any fuse in addition to the electric power controller and the electric circuit breaker or as an alternative to an electric circuit breaker. The electric power supply line does in particular not include any conventional fuse, such as a melting fuse or a fuselink. This allows for a simpler and less expensive design of the aircraft electric power supply system. Further, it may be possible to reduce the size of the aircraft electric power supply system, and the costs for maintaining the aircraft electric power supply system may be reduced as well.

The electric power controller may be able to switch off faster than the electric circuit breaker. The electric power controller may, in particular, be used in standard operation for switching the supply of electric power, and the electric circuit breaker may be activated or tripped only in emergency situations, in which the electric power controller is not able to reliably interrupt the supply of electric power, for example due to a malfunction.

For providing the desired redundancy, the electric power controller and the electric circuit breaker may be serially connected in the same section of the electric power supply line extending between the terminal of the electric power source and the line terminal of the electric load.

The electric power supply terminal may be a first electric power supply terminal of the electric power source and the electric power source may comprise a second electric power supply terminal. The line terminal of the electric load may be a first line terminal and the electric load may comprise a second line terminal. The second electric power supply terminal and the second line terminal may both be electrically coupled to a common electric ground of the aircraft electric power supply system. Such a configuration allows providing the desired operational safety of an aircraft electric power supply system, which uses a common electric ground.

The electric power controller may comprise or may be a solid state electric power controller (SSPC). Such a solid state electric power controller may comprise at least one power transistor, in particular an FET, more particularly a MOSFET, which is employed as a solid state electric power control element.

The electric circuit breaker may be a solid state electric power controller (SSPC) or may comprises a solid state tripping device. The solid state power controller or solid state tripping device may in particular comprise at least one power transistor, in particular an FET, more particularly a MOSFET, which is employed as a solid state electric power control element.

Solid state switches such as power transistors allow for fast switching and have a longer lifetime than mechanical switches. Solid state switches may further allow for switching large currents and high voltages. Solid state switches may also be less vulnerable to adverse external influences, such as accelerations and vibrations.

An aircraft electric power supply system may comprise a safety controller, which is configured for controlling the operation of the electric power controller and/or the operation of the electric circuit breaker in order to allow for a safe operation of the aircraft electric power supply system.

The aircraft electric power supply system may further comprise an overcurrent detector, which is configured for detecting any overcurrents flowing in the electric power supply line. In such an aircraft electric power supply system, the safety controller may be configured for instructing at least one of the electric power controller and/or the electric circuit breaker to interrupt the supply of electric power from the electric power source to the electric load, in case an overcurrent is detected in the power supply line.

The safety controller may in particular configured for: (i) primarily instructing the electric power controller to switch off, in case an overcurrent is detected in the power supply line; and (ii) additionally causing the electric circuit breaker to trip for interrupting the supply of electric power via the electric power supply line, in case the supply of electric power from the electric power source via the electric power supply line is not interrupted in consequence of instructing the electric power controller to switch off.

In such a configuration, the electric power controller is employed as the primary switching device, as long as it is operating reliably. The electric circuit breaker is employed as an additional safety device, which ensures that the supply of electric power from the electric power source to the electric load is reliably interrupted even in case of a failure of the electric power controller.

The aircraft electric power supply system may comprise an overvoltage detector for detecting an overvoltage at the power supply line of the electric power source. The overvoltage detector may in particular be configured for detecting an overvoltage at the power supply line with respect to a ground potential. In such a configuration, the safety controller may be configured for instructing at least one of the electric power controller and the electric circuit breaker to interrupt the supply of electric power from the electric power source to the electric load, in case an overvoltage is detected at the power supply line.

The safety controller may in particular be configured for: (i) primarily instructing the electric power controller to switch off, in case an overvoltage is detected at the power supply line, and (ii) additionally causing the electric circuit breaker to trip for interrupting the supply of electric power via the electric power supply line, in case the supply of electric power from the electric power source via the electric power supply line is not interrupted in consequence of instructing the electric power controller to switch off.

In such a configuration, the electric power controller is employed as the primary switching device, as long as it is operating reliably. The electric circuit breaker is employed as an additional safety device, which ensures that the supply of electric power from the electric power source to the electric load is reliably interrupted even in case of a failure of the electric power controller.

In an exemplary embodiment, the electric circuit breaker may comprise its own circuit breaker overcurrent detector, which is configured for detecting an overcurrent flowing through the electric circuit breaker. The electric circuit breaker may be configured for interrupting the supply of electric power from the electric power source to the electric load in case an overcurrent is detected by the circuit breaker overcurrent detector.

An electric circuit breaker comprising its own circuit breaker overcurrent detector allows the electric circuit breaker to operate autonomously, i.e. without receiving input or control instructions from an external controller. An autonomously operating electric circuit breaker may replace a conventional fuse in an electric circuit without redesigning the electric circuit. An autonomously operating electric circuit breaker may in particular replace a conventional fuse without adding an additional controller.

The electric power source of the aircraft electric power supply system may be a DC electric power source, providing a DC electric output. Alternatively, the electric power source may be an AC electric power source providing an AC electric output at its electric power supply terminals.

The electric power source may be configured for providing electric outputs in the range of 16 V to 620 V, the electric power source may in particular be configured for providing electric outputs of 28 V or of 270 V.

A method of switching off the supply of electric power to an electric load in an aircraft electric power supply system according to an exemplary embodiment of the invention may include monitoring an electric current flowing through the electric power supply line and causing at least one of the electric power controller and the electric circuit breaker to interrupt the supply of electric power from the electric power source via the electric power supply line to the electric load when the electric current flowing through electric power supply line exceeds a predefined current limit. The predefined current limit may, for example, be in the range of between 1 A and 50 A.

The method may in particular include: (i) primarily instructing the electric power controller to switch off; and (ii) additionally causing the electric circuit breaker to trip, in case the supply of electric power from the electric power source via the electric power supply line to the electric load is not interrupted in consequence of instructing the electric power controller to switch off.

A method of switching off the supply of electric power to an electric load in an aircraft electric power supply system according to an exemplary embodiment of the invention may include monitoring an electric voltage supplied at the power supply terminal of the electric power source, in particular an electric voltage, which is defined with respect to an electric ground, and causing at least one of the electric power controller and the electric circuit breaker to interrupt the supply of electric power from the electric power source via the electric power supply line to the electric load when the voltage supplied at the electric power supply terminal exceeds a predefined voltage limit.

The method may in particular include: primarily instructing the electric power controller to switch off; and (ii) additionally causing the electric circuit breaker to trip, in case the supply of electric power from the electric power source via the electric power supply line to the electric load is not interrupted in consequence of instructing the electric power controller to switch off.

Exemplary embodiments of the invention also include an aircraft, such as an airplane or a helicopter, which is equipped with an aircraft electric power supply system according to an exemplary embodiment of the invention. The additional features, modifications and effects, as described above with respect to an aircraft electric power supply system and/or with respect to a method of switching off a supply of electric power from an aircraft electric power supply system, apply to such an aircraft in an analogous manner.

In the following, an exemplary embodiment of an aircraft electric power supply system will be described is described in more detail with reference to the enclosed figures.

Figure 1 depicts a schematic side view of an aircraft comprising an aircraft electric power supply system according to an exemplary embodiment of the invention.

Figure 2 depicts a schematic view of an aircraft electric power supply system according to an exemplary embodiment of the invention.

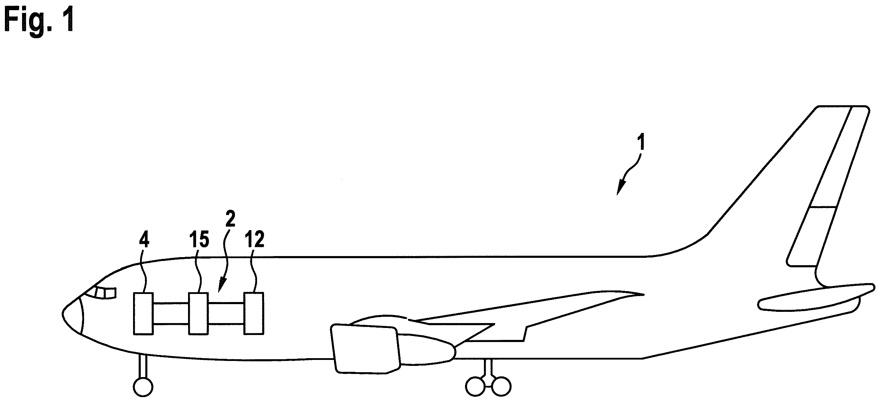

Figure 1 shows a schematic view of an aircraft 1, in particular of an airplane, which is equipped with an aircraft electric power supply system 2 including an aircraft electric power source 4, an electric load 12, and an electric safety circuit 15. The electric safety circuit 15 is configured for controlling the supply of electric power from the aircraft electric power source 4 to the electric load 12.

Although the aircraft electric power supply system 2, as it is depicted in Figure 1, comprises only a single aircraft electric power source 4, a single electric load 12, and a single electric safety circuit 15, respectively, it is to be understood that this is for purpose of illustration only. In practice, embodiments of an aircraft electric power supply system 2 may comprise more the one of each of said components, respectively. Typically, embodiments of an aircraft power supply system 2 may include at least numerous electric safety circuits 15 and numerous electric loads 12. An aircraft 1 may also comprise multiple aircraft electric power supply systems 2.

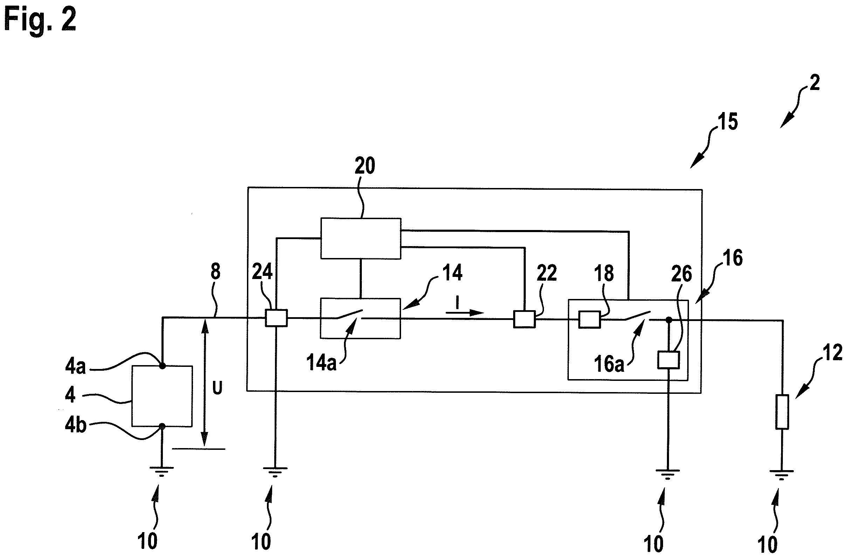

Figure 2 depicts a schematic view of an aircraft electric power supply system 2 according to an exemplary embodiment of the invention.

The aircraft electric power supply system 2 comprises an electric power source 4 with two electric power supply terminals 4a, 4b for providing electric power and/or an electric output at said electric power supply terminals 4a, 4b.

The electric power source 4 may be a DC electric power source 4, providing a DC electric output, as it is depicted in Figure 2. Alternatively, the electric power source 4 may be an AC electric power source 4, providing an AC electric output at its electric power supply terminals 4a, 4b.

The electric power source 4 may be configured for providing electric outputs in the range of 16 V to 620 V, the electric power source 4 may in particular be configured for providing electric outputs of 28 V or of 270 V.

An electric power supply line 8 electrically couples the first electric power supply terminal 4a of the electric power source 4 to a first line terminal 12a of the electric load 12.

The second electric power supply terminal 4b of the electric power source 4 and a second line terminal 12b of the electric load 12 are electrically coupled to a common electric ground 10. The common electric ground 10 may, for example, be provided by the chassis of the aircraft 1.

In an alternative embodiment, which is not explicitly shown in the figures, the second electric power supply terminal 4b of the electric power source 4 may be electrically coupled to the second line terminal 12b of the electric load 12 by an additional electric power supply line.

The electric safety circuit 15, which is configured for monitoring and controlling the supply of electric power from the electric power source 4 to the electric load 12, is arranged between the electric power source 4 and the electric load 12.

The electric safety circuit 15 comprises an electric power controller 14, which is arranged in the electric power supply line 8 so that any electric current I flowing through the electric power supply line 8 flows through the electric power controller 14 as well.

The electric power controller 14 comprises a first a solid state electric power control element, for example a first electric switch 14a, which is arranged in the electric power supply line 8 for selectively switching the supply of electric power, which is supplied from the electric power source 4 to the electric load 12 via the electric power supply line 8a.

The electric power controller 14 may, in particular, be a solid state electric power controller (SSPC) comprising a power transistor, in particular an FET, more particularly a MOSFET, which acts as a first solid state electric power control element.

The electric safety circuit 15 further comprises an electric circuit breaker 16, which is arranged in the electric power supply line 8 in a serial configuration with the electric power controller 14 so that any electric current I flowing through the electric power supply line 8 flows through the electric circuit breaker 16 as well.

In other words, the electric power controller 14 and the electric circuit breaker 16 are serially connected in the same section of the electric power supply line 8 extending between the first power supply terminal 4a of the electric power source 4 and the first line terminal 12a of the electric load 12.

In the configuration depicted in Figure 2, the electric circuit breaker 16 is arranged between the electric power controller 14 and the electric load 12. In an alternative, equivalent configuration, which is not explicitly shown in the figures, the electric circuit breaker 16 may be arranged between the electric power source 4 and the electric power controller 14.

The electric power controller 14 and the electric circuit breaker 16, which are arranged in a serial configuration with respect to each other, allow the electric power controller 14 and the electric circuit breaker 16 to interrupt the supply of electric power from the electric power source 4 to the electric load 12 via the electric power supply line 8 independently of each other.

Such a serial configuration allows in particular the electric circuit breaker 16 to interrupt the supply of electric power from the electric power source 4 to the electric load 12 via the electric power supply line 8 in case the electric power controller 14 fails to interrupt the supply of electric power via the electric power supply line 8, for example due to a malfunction of the electric power controller 14.

The electric safety circuit 15 may, in particular, be configured to interrupt the supply of electric power from the electric power source 4 to the electric load 12 via the electric power supply line 8 in case an overcurrent, which exceeds a predefined current limit Iₘₐₓ, flows through the electric power supply line 8 and/or in case an overvoltage, which exceeds a predefined overvoltage limit, is provided at the power supply terminals 4a, 4b of the electric power source 4.

In order to ensure that the supply of electric power from the electric power source 4 via the electric power supply line 8 is reliably interrupted, if necessary, the electric circuit breaker 16 has a different configuration than the electric power controller 14. The electric circuit breaker 16 may in particular comprise different electric components than the electric power controller 14.

Due to the fact that the electric circuit breaker 16 and the electric power controller 14 have different configurations, in particular different electric components, the risk that an interruption of the supply of electric power from the electric power source 4 via the electric power supply line 8 is prevented by a systematic problem, which is common to the electric power controller 14 and the electric circuit breaker 16, may be considerably reduced.

As a result, the reliability of the electric safety circuit 15 and, in consequence, the safety of the aircraft electric power supply system 2 may be considerably enhanced.

The electric power controller 14 may be able to switch off faster than the electric circuit breaker 16. The electric safety circuit 15 may, in particular, be configured for primarily causing the electric power controller 14 to switch off for interrupting the supply of electric power via the electric power supply line 8, and for causing the electric circuit breaker 16 to trip, for interrupting the supply of electric power via the electric power supply line 8, only as a secondary measure in case the supply of electric power via the electric power supply line 8 is not interrupted as a result of instructing the electric power controller 14 to switch off. In other words, the electric circuit breaker 16 may be configured to provide a second safety device, which is activated only in case the electric power controller 14 fails to interrupt the supply of electric power via the electric power supply line 8.

The electric circuit breaker 16 comprises a second a solid state electric power control element, for example a second electric switch 16a, which is arranged in the electric power supply line 8 for selectively switching the electric current I flowing through the electric power supply line 8a.

In an exemplary embodiment, the electric circuit breaker 16 may be or may comprise a solid state electric power controller (SSPC), in which the second electric switch 16a is a power transistor, in particular an FET, more particularly a MOSFET. A solid state electric power controller (SSPC) comprising a power transistor, which acts as the second electric switch 16a, may provide a reliable electric circuit breaker 16, which is able to interrupt large electric currents and high electric voltages.

In the embodiment depicted in Figure 2, the electric safety circuit 15 further comprises a safety controller 20, which is configured for controlling the electric power controller 14. Optionally, the safety controller 20 may further be configured for controlling the electric circuit breaker 16.

The safety controller 20 may in particular be configured for instructing the electric circuit breaker 16 to trip for interrupting the supply of electric power from the electric power source 4 via the electric power supply line 8 to the electric load 12, in case a malfunction has been detected by safety controller 20.

The electric safety circuit 15 may comprise an overcurrent detector 22, for detecting any electric currents I flowing in the electric power supply line 8. The safety controller 20 may be coupled to the overcurrent detector 22 for receiving an indicator, indicating the size of the electric current I flowing through the electric power supply line 8. The safety controller 20 may be configured for instructing at least one of the electric power controller 14 and the electric circuit breaker 16 switch off, i.e. to interrupt the supply of electric power from the electric power source 4 to the electric load 12 via the electric power supply line 8, in case the detected electric current I flowing through the electric power supply line 8 exceeds a predefined current limit Iₘₐₓ.

The safety controller 20 may, in particular, be configured for:
(i) primarily instructing the electric power controller 14 to switch off, in case an electric current I exceeding a predefined current limit Iₘₐₓ has been detected by the overcurrent detector 22; and
(ii) additionally causing the electric circuit breaker 16 to trip, in case the supply of electric power from the electric power source 4 via the electric power supply line 8 to the electric load 12 is not interrupted by the electric power controller 14 in consequence of instructing the electric power controller 14 to switch off.

The safety controller 20 may be configured for instructing the electric power controller 14 and/or the electric circuit breaker 16 to interrupt the supply of electric power from the electric power source 4 to the electric load 12, if the electric current I flowing through the electric power supply line 8 exceeds a predefined current limit Iₘₐₓ. The predefined current limit Iₘₐₓ may, for example, be in the range of between 1 A and 50 A.

Alternatively or additionally, the electric safety circuit 15 may comprise an overvoltage detector 24 for detecting an overvoltage at the electric power supply line 8, in particular and overvoltage with respect to the common electric ground 10.

The safety controller 20 may be coupled with the overvoltage detector 24 for receiving an indicator, indicating the voltage U at the electric power supply line 8.

In such a configuration, the safety controller 20 may be configured for instructing at least one of the electric power controller 14 and the electric circuit breaker 16 to interrupt the supply of electric power from the electric power source 4 to the electric load 12, in case the detected voltage U at the electric power supply line 8 exceeds a predefined voltage limit Uₘₐₓ.

The safety controller 20 may, in particular, be configured for:
(i) primarily instructing the electric power controller 14 to switch off, in case an overvoltage is detected by the overvoltage detector 24, and
(ii) additionally causing the electric circuit breaker 16 to trip for interrupting the supply of electric power from the electric power source 4 via the electric power supply line 8 to the electric load 12, in case the supply of electric power from the electric power source 4 via the electric power supply line 8 to the electric load 12 is not interrupted in consequence of instructing the electric power controller 14 to switch off.

In addition or as an alternative to coupling the safety controller 20 with the electric circuit breaker 16, as it has been described before, the electric circuit breaker 16 may comprise its own overcurrent detector 18, which in the following will be denoted as circuit breaker overcurrent detector 18. The circuit breaker overcurrent detector 18 is configured for detecting any overcurrents flowing through the electric circuit breaker 16. An electric circuit breaker 16 comprising its own circuit breaker overcurrent detector 18 may be configured for interrupting the flow of any electric currents I flowing through the electric circuit breaker 16, in case an electric current I exceeding the predefined current limit Iₘₐₓ is detected by the circuit breaker overcurrent detector 18.

An electric circuit breaker 16 comprising its own circuit breaker overcurrent detector 18 is able to operate autonomously, i.e. without receiving any external control signals from a safety controller 20 or a similar device, for reliably interrupting the flow of any electric currents I flowing through the electric circuit breaker 16 in case an overcurrent, i.e. an electric current I exceeding the predefined current limit Iₘₐₓ, is detected to flow through the electric power supply line 8.

The electric circuit breaker 16 may be configured for interrupting the supply of electric power from the electric power source 4 to the electric load 12, if the electric current I flowing through the electric power supply line 8 exceeds a predefined predefined current limit Iₘₐₓ. The predefined current limit Iₘₐₓ may, for example, be in the range of between 1 A and 50 A.

The predefined current limit Iₘₐₓ may by a fixed current limit Iₘₐₓ, i.e. a current limit Iₘₐₓ that is set and fixed when the electric circuit breaker 16 is manufactured. Alternatively, the electric circuit breaker 16 may allow for adjusting the predefined threshold current Iₘₐₓ. Allowing to adjust the predefined current limit Iₘₐₓ may allow for employing the same type of electric circuit breaker 16 in different electric circuits by adjusting the predefined current limit Iₘₐₓ to the actual electric circuit, in which the electric circuit breaker 16 is employed.

Alternatively or additionally, the electric circuit breaker 16 may be provided with its own circuit breaker overvoltage detector 26, which is configured for detecting an overvoltage at the electric power supply line 8, in particular an overvoltage at the electric power supply line 8 with respect to the common electric ground 10. An electric circuit breaker 16, which is provided with its own circuit breaker overvoltage detector 26, may allow the electric circuit breaker 16 to autonomously interrupt the supply of electric power to the electric load 12 in case an overvoltage, exceeding the predefined voltage limit Uₘₐₓ, is detected by the circuit breaker overvoltage detector 26.

In an aircraft electric power supply system 2 according to exemplary embodiments of the invention the electric circuit breaker 16 provides the functionality of an electric fuse, i.e. the functionality of switching off the supply of electric power in case of malfunction of the electric power controller 14, in particular in case of an overcurrent or of an overvoltage. In consequence, an aircraft electric power supply system 2 according to an exemplary embodiment of the invention does not need to be provided with a conventional fuse, such as a melting fuse or a fuselink, in addition to the electric power controller 14 and the electric circuit breaker 16.

While the invention has been described with reference to an exemplary embodiment, it will be understood by those skilled in the art that various changes may be made and equivalents may be substituted for elements thereof without departing from the scope of the invention. In addition, modifications may be made to adapt a particular situation or material to the teachings of the invention without departing from the essential scope thereof. Therefore, it is intended that the invention is not limited to the particular embodiment disclosed, but that the invention will include all embodiments falling within the scope of the appended claims.

## Claims

1. Aircraft electric power supply system (2) comprising:
an electric power source (4) with at least one electric power supply terminal (4a) for providing electric power;
an electric power supply line (8) for electrically coupling the at least one electric power supply terminal (4a) to a line terminal (12a) of an electric load (12);
an electric power controller (14), which is arranged in the electric power supply line (8) for selectively controlling the supply of electric power from the electric power source (4) via the electric power supply line (8) to the electric load (12); and
an electric circuit breaker (16), which is arranged in the electric power supply line (8) in serial configuration with the electric power controller (14), allowing the electric circuit breaker (16) to interrupt the supply of electric power from the electric power source (4) via the electric power supply line (8) to the electric load (12) independently of the electric power controller (14);
wherein the electric circuit breaker (16) has a different configuration than the electric power controller (14).

2. Aircraft electric power supply system (2) according to claim 1, wherein the electric power controller (14) is able to switch off faster than the electric circuit breaker (16).

3. Aircraft electric power supply system (2) according to claim 1 or 2, wherein the electric power controller (14) and the electric circuit breaker (16) are serially connected in the same section of the electric power supply line (8) extending between the at least one terminal (4a) of the electric power source (4) and the line terminal (12a) of the electric load (12).

4. Aircraft electric power supply system (2) according to any of claims 1 to 3, wherein the electric power supply terminal (4a) is a first electric power supply terminal (4a) of the electric power source (4) and wherein the electric power source (4) comprises a second electric power supply terminal (4b); wherein the line terminal (12a) of the electric load (12) is a first line terminal (12a) and the electric load (12) comprises a second line terminal (12b); and wherein the second electric power supply terminal (4b) and the second line terminal (12b) are both electrically coupled to a common electric ground (10).

5. Aircraft electric power supply system (2) according to any of claims 1 to 4, wherein the electric power controller (14) comprises or is a solid state electric power controller (SSPC); wherein the solid state electric power controller comprises a power transistor, in particular an FET, more particularly a MOSFET, as a solid state electric power control element.

6. Aircraft electric power supply system (2) according to any of claims 1 to 5, wherein the electric circuit breaker (16) is a solid state electric power controller (SSPC) or comprises a solid state tripping device.

7. Aircraft electric power supply system (2) according to claim 6, wherein the solid state power controller or solid state tripping device comprises a power transistor, in particular an FET, more particularly a MOSFET, as a solid state electric power switching element (16a)

8. Aircraft electric power supply system (2) according to any of claims 1 to 7, wherein the electric circuit breaker (16) comprises a circuit breaker overcurrent detector (18) for detecting an overcurrent flowing through the electric circuit breaker (16), and wherein the electric circuit breaker (16) is configured to interrupt the supply of electric power from the electric power source (4) to the electric load (12), in case an overcurrent is detected by the circuit breaker overcurrent detector (18).

9. Aircraft electric power supply system (2) according to any of claims 1 to 8, wherein the electric power supply line (8) does not include any fuse in addition to the electric power controller (14) and the electric circuit breaker (16), wherein the electric power supply line (8) does in particular not include a conventional fuse, such as a melting fuse or a fuselink.

10. Aircraft electric power supply system (2) according to any of claims 1 to 9, further comprising a safety controller (20), which is configured for controlling the electric power controller (14) and/or the electric circuit breaker (16).

11. Aircraft electric power supply system (2) according to claim 10, further comprising an overcurrent detector (22) for detecting an overcurrent flowing in the electric power supply line (8); wherein the safety controller (20) is configured for instructing at least one of the electric power controller (14) and the electric circuit breaker (16) to interrupt the supply of electric power from the electric power source (4) to the electric load (12), in case an overcurrent is detected in the power supply line (8);
wherein the safety controller (20) is in particular configured for:
(i) primarily instructing the electric power controller (14) to switch off, in case an overcurrent is detected in the power supply line (8); and
(ii) additionally causing the electric circuit breaker (16) to trip, in case the supply of electric power from the electric power source (4) via the electric power supply line (8) to the electric load (12) is not interrupted a result of instructing the electric power controller (14) to switch off.

12. Aircraft electric power supply system (2) according to claim 10 or 11, further comprising an overvoltage detector (24) for detecting an overvoltage at the power supply line (8), in particular an overvoltage with respect to a common electric ground (10);
wherein the safety controller (20) is configured for instructing at least one of the electric power controller (14) and the electric circuit breaker (16) to interrupt the supply of electric power from the electric power source (4) to the electric load (12), in case an overvoltage is detected at the power supply line (8);
wherein the safety controller (20) is in particular configured for:
(i) primarily instructing the electric power controller (14) to switch off, in case an overvoltage is detected at the power supply line (8); and
(ii) additionally causing the electric circuit breaker (16) to trip, in case the supply of electric power from the electric power source (4) via the electric power supply line (8) to the electric load (12) is not interrupted as a result of of instructing the electric power controller (14) to switch off.

13. Aircraft (1) comprising an aircraft electric power supply system (2) according to any of claims 1 to 12.

14. Method of interrupting a supply of electric power in an aircraft electric power supply system (2) according to any of claims 1 to 12 to an electric load (12); wherein the method includes causing at least one of the electric power controller (14) and the electric circuit breaker (16) to interrupt the supply of electric power from the electric power source (4) to the electric load (12) via the electric power supply line (8) independently of each other.

15. Method according to claim 14,
wherein the method includes monitoring an electric current (I) flowing through the electric power supply line (8) and causing at least one of the electric power controller (14) and the electric circuit breaker (16) to interrupt the supply of electric power from the electric power source (4) via the electric power supply line (8) to the electric load (12) when the electric current (I) flowing through electric power supply line (8) exceeds a predefined current limit (Iₗᵢₘᵢₜ); and/or
wherein the method includes monitoring an electric voltage (U) supplied at the power supply terminal (4a) of the electric power source (4), in particular an electric voltage (U), which is supplied with respect to an electric ground (10), and causing at least one of the electric power controller (14) and the electric circuit breaker (16) to interrupt the supply of electric power from the electric power source (4) via the electric power supply line (8) to the electric load (12) when the voltage (U) supplied at the electric power supply terminal (4a) exceeds a predefined voltage limit (Ulimit);
wherein the method particularly includes:
(i) primarily instructing the electric power controller (14) to switch off; and
(ii) additionally causing the electric circuit breaker (16) to trip, in case the supply of electric power from the electric power source (4) to the electric load (12) via the electric power supply line (8) is not interrupted as a result of instructing the electric power controller (14) to switch off.
